# EUROPEAN PATENT SPECIFICATION

(11) **EP 1 500 890 B1**
(45) Date of publication and mention of the grant of the patent: **01.02.2006**
(21) Application number: 02770350.3
(22) Date of filing: 03.10.2002
(51) Int. Cl.: F27B 14/06, C22B 9/22, C22B 4/00, F27B 1/20, F27B 14/08

(54) **SEPARATION REACTOR WITH PLASMA**
SPALTUNGSREAKTOR MIT PLASMA
SEPARATEUR / REACTEUR A PLASMA

(30) Priority: 19.04.2002 RU 2002110356
(43) Date of publication of application: 26.01.2005
(73) Proprietor: BURLOV, Jury Aleksandrovich, Moskovskaya Obl. (RU); BURLOV, Ivan Jurievich, Moskovskaya Obl. (RU); BURLOV, Alexandr Juvievich, Moskovskaya Obl. (RU)
(72) Inventor: BURLOV, Jury Aleksandrovich, Moskovskaya Obl. (RU); BURLOV, Ivan Jurievich, Moskovskaya Obl. (RU); BURLOV, Alexandr Juvievich, Moskovskaya Obl. (RU)
(74) Representative: Jeck, Anton
(86) International application number: PCT/RU2002/000441
(87) International publication number: WO 2003/089862

(56) References cited:
- DE-A- 2 222 190
- FR-A1- 2 280 285
- RU-C1- 2 176 277
- SU-A- 1 020 738

## Description

Die Erfindung betrifft einen Plasmaspaltungsreaktor oder Plasmaseparator gemäß dem Oberbegriff des Anspruchs 1.

Durch den Urheberschein UDSSR 1020730, MKL F27B, 14/06, aus dem Jahr 1981, ist eine Vorrichtung zum Schmelzen von Material, vorzugsweise von Zementklinkern, bekannt, die eine zylindrische Kammer, durch einen Kammerdeckel geführte Stabelektroden, Öffnungen zur Zuführung des Rohstoffmaterials in die Kammer und zwei die Kammer umfassende, elektromagnetische Spulen aufweist.

Der Nachteil dieser bekannten Vorrichtung besteht in der unbefriedigenden lokalen Vermischung der Schmalze und damit der unbefriedigenden Qualität des fertigen Produkts, der Unzuverlässigkeit des Schmelzsystems und dessen Aufteilung in Bindemittel und Metalle, da der Kammerablass gemeinsam ist.

Ferner ist durch das Patent der russischen Föderation 2176277, C22B, 9/22 und O5B, 7/18 vom 27.11.2001, Bul.-Nr. 33, und Anmeldung vom 28.12.2000 (Autoren J. A. Burlow et al) ein Plasmaspaltungsreaktor oder Plasmaseparator gemäß dem Oberbegriff des Anspruchs 1 bekannt.

Der Nachteil dieses bekannten Reaktors besteht darin, dass er nicht luftdicht ist, weil zur Schaffung einer Oxidationsatmosphäre in der Arbeitszone des Reaktors Luft angesaugt werden muss. Dadurch nimmt jedoch die Lebensdauer der Elektroden ab, und die thermochemische Korrosion wird erhöht, die sich auf die Auskleidung des Reaktors negativ auswirkt. Insbesondere wird die Auskleidung in der Nähe des Schmelzenspiegels ausgeschmolzen, was auch zur Verringerung der Temperatur in der Reaktorarbeitszone führt.

Die Aufgabe der vorliegenden Erfindung besteht darin, einen Plasma-spaltungsreaktor oder Plasmaseparator gemäß dem Oberbegriff des Anspruchs 1 zu schaffen, bei dem die Lebensdauer der Auskleidung des Reaktors, die Zuverlässigkeit des Schmelzprozesses, die Produktivität des Reaktors und die Qualität des fertigen Produkts erhöht sind, ferner der Energieaufwand für die Fertigung vermindert ist, und bei dem beim Schmelzen eine selektive Trennung in Begleitbindemittel, Buntmetalle und Sublimate erfolgt.

Diese Aufgabe wird mit den Merkmalen des Anspruchs gelöst.

Eine weitere Ausbildung der Erfindung sieht vor, dass ein Granulator zur Granulierung, Abkühlung und Wärmeverwertung der aus dem Ablasskanal abgelassenen, leichteren Bindemitteln, vorzugsweise Zementklinkerschmelze, vorgesehen ist und zwei lange, parallele Metallzylinder aufweist, die sich um ihre Achsen in entgegengesetzten Richtungen gegeneinander drehen und innen wassergekühlt sind.

Die Erfindung wird nun anhand eines Ausführungsbeispiels näher erläutert.

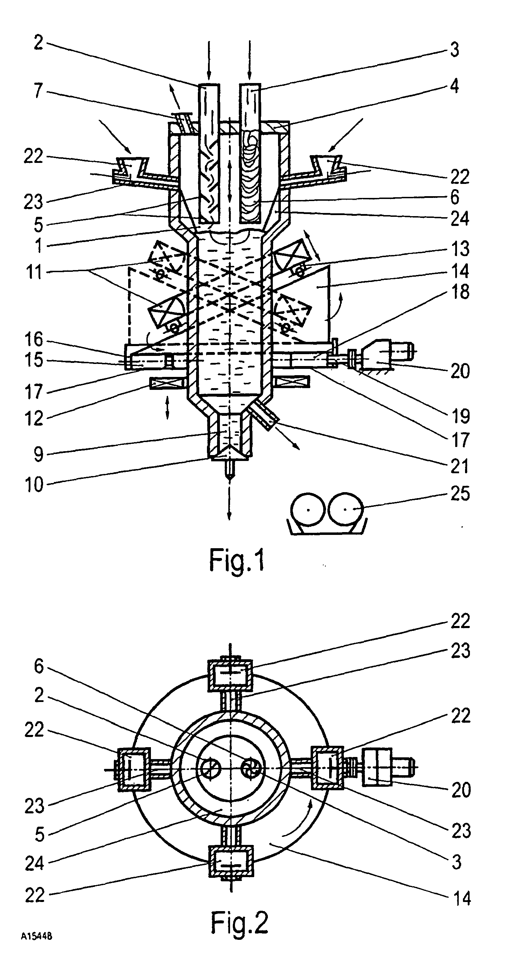

Der in den Figuren 1 und 2 dargestellte Plasmaspaltungsreaktor oder Plasmaseparator umfasst eine wassergekühlte, zylindrische Kammer 1, die durch einen Zylinderkörper 1' gebildet ist, und hohle Stabelektroden 2 und 3 aus Graphit, die in die Kammer 1 durch einen luftdichten Kammerdeckel 4 ragen. In den Hohlräumen der Elektroden 2, 3 sind austauschbare Heizelemente 6 eingebaut, die als geneigte Schüttzwischenböden 5 ausgebildet sind. Die Elektrode 2, 3 hat zur einfacheren Herstellung eine rechteckige Querschnitts-form, und die Zwischenböden 5 können in Öffnungen der Seitenwände der Elektroden 2, 3 eingesetzt werden. Die Elektrode 3 kann in ihrem Hohlraum das das Fallen des Rohstoffs behindernde Element in Form einer Schnecke 6 aufweisen. Der Kammerdeckel 4 ist ferner mit einem Auslasskanal 7 für den Auslass von Abgasen einschließlich der Sublimate von Buntmetallen versehen.

Im Bodenbereich der Kammer 1 ist ein Ventil 10 angeordnet, das eine Ablassöffnung 9 für das Ablassen der Metallschmelze abdeckt. Um einen unteren Teil des Zylinderkörpers 1' sind eine elektromagnetische Oberspule 11 und eine elektromagnetische Unterspule 12 übereinander angeordnet, die die Kammer 1 umschließen, wobei die Oberspule 11 zu ihrer Verstellung in Bezug auf die Längs- und Querrichtung des Zylinderkörpers 1' mit einem Antrieb verbunden ist.

Die Oberspule 11 ist mit Rollen 13 versehen, die auf einer Führungsbahn 14' eines Führungsrings 14 rollen. Der untere Bereich des Führungsrings 14 stützt sich seinerseits auf Rollen 15 ab, die in Lagern 16 laufen. Diese Lager 16 sind in einem Stützring 17 angeordnet, der in unmittelbarer Nähe des Zylinderkörpers 1' befestigt ist. Eine der Rollen, und zwar die Rolle 18, auf die sich der Führungsring 14 stützt, ist führend und mittels einer Welle 19 mit einem von einem Motor betriebenen Untersetzungsgetriebe 20 verbunden. Zwischen der Unterspule 12 und dem Ventil 10 ist ein Ablasskanal 21 für das Ablassen von Bindemitteln (Kunstklebstoffe) der Schmelze, zum Beispiel von Zement-klinkermasse, angeordnet. Der Ablasskanal 21 mit einem Ventil abgedeckt, das nicht gezeigt ist.

Vier seitlich am Zylinderkörper 1' angeordnete Zuführungsschächte 22, die in Fig. 2 besser zu erkennen sind, sind an ihnen zugeordnete Zuführungskanäle 23 angeschlossen. Diese Zuführungskanäle 23 führen durch die Seitenwand des Zylinderkörpers 1' in einem Winkel von 90° zu dieser waagerecht in den oberen Teil der Kammer 1 über dem Schmelzenspiegel. Unterhalb der Mündung dieser Zuführungskanäle 23 ist ein ringförmiger Rutschkörper 24 gebildet. Zuführungsschächte 22 und Zuführungskanäle 23 dienen zur Zuführung einer Rohstoffmenge, die 10 % der Gesamtbeschickung des Reaktors beträgt. Der Rutschkörper 24 verhindert eine thermochemische Reaktion mit der Auskleidung des Zylinderkörpers 1'.

Unter dem Ablasskanal 21 sind lange Metallzylinder 25 aufgestellt, die sich um ihre Achsen in entgegengesetzten Richtungen drehen, von innen wassergekühlt sind und die Funktion eines Wärmetauschers und der Granulierung der Bindemittel der Schmelze erfüllen.

Der Plasmaspaltungsreaktor oder Plasmaseperator arbeitet in folgender Weise: In die Zuführungsschächte 22 wird eine trockene Rohstoffmenge eingefüllt, die den Rutschkörper 24 bildet und damit eine thermochemische Korrosion der Auskleidung des Zylinderkörpers 1' verhindert. Die in die Kammer 1 eingeführte, trockene Rohstoffmenge enthält chemische Verbindungen, die bei deren Schmelzen ein Bindemittel, beispielsweise Zementklinkermasse, bilden. Wenn als Rohstoff Abfälle, beispielsweise aus der chemischen und metallurgischen Produktion, verwendet werden, enthalten diese Abfälle eine gewisse Menge an Buntmetallen.

Die innerhalb der Kammer 1 liegenden Elektrodenenden werden zusammen in den unteren Teil des Zylinderkörpers 1' abgesenkt, und zwar bis unter die Unterspule 12. Beim Ansteigen des Niveaus des Rohstoffs bis zu den Elektrodenenden wird auf die Elektroden 2, 3 eine Spannung gegeben, die beispielsweise eine Gleichspannung eines Umsetzers sein kann. Die Elektrodenenden werden zusammengeführt, bis sie Kontakt miteinander haben; dann werden sie auseinandergerückt, wobei eine elektrische Bogenentladung erfolgt, die ein Tieftemperaturplasma bildet. Dadurch wird der Rohstoff in der Kammer 1 bis zum Rohstoffschmelzpunkt erhitzt. Beim Klinkerbrennen erreicht die Temperatur der Schmelze 2000 - 2100° C.

Wenn das Niveau der Schmelze höher als die Unterspule 12 liegt, wird Spannung an diese Spule angelegt. Die Zylinderwände des Zylinderkörpers 1' sind aus nichtmagnetischem Material hergestellt, beispielsweise aus Stahl, der mit einer großen Menge von Nickel, Chrom oder Titan legiert ist. Das infolge der erregten Spule sich ergebende, elektromagnetische Feld wirkt auf die Schmelze ein, die im flüssigen Zustand stromleitend wird. Der induktive Strom unterstützt die aufgrund der Bogenentladung erreichte Temperatur. Nachdem eine bestimmte Schmelzmenge erzeugt worden ist und die Elektroden 2, 3 innerhalb der Kammer 1 auf mehr als 1000 °C aufgeheizt worden sind, wird Rohstoff über die Hohlräume der Elektroden 2, 3 zugeführt. Dabei wird der Rohstoff in der Elektrode 2 vom Zwischenboden auf den Zwischenboden 5 umgeschüttet, der bis auf eine Temperatur aufgeheizt wird, die der Temperatur der Elektrode angenähert ist.

Bei dieser im Vergleich zum senkrechten, direkten Fallen des Rohstoffs verhältnismäßig langsamen Umschüttung des Rohstoffs und bei direktem Kontakt des Rohstoffs mit der erwärmten Oberfläche der Zwischenböden erfolgt die Übertragung der Wärme von den Zwischenböden zum Rohstoff, und der vorgewärmte, bis auf die Temperatur der Dissoziation von Karbonaten gebrachte Rohstoff gerät auf die Oberfläche der Schmelze und schmilzt mit einer höheren Geschwindigkeit, weil die exothermen Reaktionen in diesem Fall mit der Abgabe von Wärme verbunden sind. Dabei wird die Leistungsfähigkeit der Kammer 1 erhöht. Derselbe Aufheizungsvorgang des Rohstoffs erfolgt in der Elektrode 3, aber in diesem Fall geschieht die Aufheizung bei der Bewegung des Rohstoffs auf der schneckenförmigen Oberfläche. Wenn die Schmelze über die Oberspule 11 ansteigt, wird an diese eine Spannung angelegt. Dabei wird der mit dem Untersetzungsgetriebe 20 verbundene Motor eingeschaltet. Durch die Welle 19 wird eine Drehbewegung auf die Rolle 18 übertragen, die der Führungsbahn 14' in Verbindung steht. Die Drehbewegung der Rolle 18 führt zu einer Drehbewegung der Rollen 15 und damit der schrägen Führungsbahn 14', so dass die auf den Rollen 13 geführte Oberspule 11 ihre Lage um den Zylinderkörper 1' wobbelartig verändert. Bei der Drehung des Führungsrings 14 und der wobbelartigen Bewegung der dreiphasigen Oberspule 11 verändert diese auch das magnetische Feld, das innerhalb der Schmelze gebildet wird, so dass die Schmelze gründlich vermischt und zuätzlich erwärmt wird. Die durch die Schwingbewegung der Oberspule 11 und das sich drehende, magnetische Feld bedingte, gründliche Vermischung der Schmelze hat deren Homo-genisierung zur Folge, so dass die Leistungsfähigkeit des Plasmaspaltungs-reaktors und die Qualität der Grundproduktion, beispielsweise der Zementklinkermasse, erhöht werden. Die Geschwindigkeit der Vermischung wird durch die Geschwindigkeit der Änderung des magnetischen Felds bestimmt und hängt von der Frequenz und der Kapazität des Wechselstroms und der Geschwindigkeit der mechanischen Schwingungen der Oberspule 11 ab, wobei diese Geschwindigkeit wiederum von der Drehgeschwindigkeit der Führungsbahn 14' abhängt. Die Geschwindigkeit der Vermischung wird abhängig von der Klebkraft der Schmelze und diese Klebkraft wird abhängig von der Temperatur der Schmelze eingestellt. Wenn die Daten der Schmelz-temperatur ermittelt sind, wird danach auch die Geschwindigkeit der Schwingungen der Oberspule 11 festgelegt.

bei der Chargeneinschmelzung für die Erzeugung der Zementklinkermasse, in der eine kleine Menge von seltenen Metallen enthalten ist, werden einige dieser Metalle (außer Wolfram und Molybden), deren Schmelzpunkte etwas über dem Schmelzpunkt der Zementklinkermasse liegt, über den Ablasskanal 21 abgeführt; sie werden periodisch in Blockform gebracht. Die Metallabscheidung kommt dann zustande, wenn die Dichte der Metalle mindestens zweimal so hoch wie die der Schmelze der Zementklinkermasse ist.

Die Dämpfe der leicht sublimierenden, seltenen Metalle, beispielsweise Lithium, zusammen mit Kohlendioxid, das aufgrund der Dekarbonisierung der Karbonatkomponenten der Zementklinkermassencharge ausgeschieden wird, strömen unter der Wirkung des entstehenden Drucks über den Auslasskanal 7 ab und werden besonderen Vorrichtungen zugeführt, in denen die Dämpfe der Metalloxide verdichtet werden und das Kohlendioxid zur Erzeugung von Trockeneis verwendet werden kann. Das Kohlendioxid kann auch mittels einer besonderen Druckvorrichtung über die Elektroden 2, 3 wiedem dem Reaktor zugeführt werden. Die Sublimate der Metalloxide werden zur Erzeugung von Konditionsprodukten weiterverarbeitet.

Die Zementklinkermassenschmelze wird periodisch oder ständig (bei der festgelegten Zuführung des Rohstoffs in die Kammer 1 in einen Granulator zur Verwertung der Schmelzenwärme und zur Granulation gegossen. Der Granulator besteht aus Metallzylindern 25, die sich um ihre Achsen in entgegengesetzten Richtungen drehen und innen wassergekühlt sind. (Zur Viskositätsverminderung der Schmelze der Zementklinkermasse während des periodischen Abgießens kann die Unterspule 12 in den Bereich des Ablasskanals 21 versetzt werden). Der abgekühlte Zementklinker wird in eine Zerkleinerungsvorrichtung zur Erzeugung von Zement gebracht.

Der Plasmaspaltungsreaktor gemäß der Erfindung lässt also aufgrund der thermischen Chargenverarbeitung zu, die Produktivität und aufgrund der aktiven Vermischung und der Regelung der Abkühlgeschwindigkeit der Schmelze die Qualität und die Vielfalt der Eigenschaften der fertigen Produkte zu erhöhen. Die konstruktive Ausführung des Reaktors lässt zu, Nebenprodukte, wie die Schmelze und die Sublimate, zu gewinnen.

## Claims

1. Plasma separation reactor or plasma separator for the simultaneous processing of a melt comprising highly fluid, metal and non-metal raw materials as well as the sublimates of this melt and accompanying non-ferrous metals, this reactor comprising the following:
- a chamber (1) formed by a cylindrical body (1'),
- at least two hollow bar electrodes (2, 3) which protrude into the chamber (1) through an airtight chamber lid (4), through which electrodes the raw material is fed and which have in their cavities exchangeable heating elements (5,6) arranged in the form of a screw and designed as inclined charge shelves (5) preventing the raw material from falling,
- an outlet (9), arranged in the base of the cylindrical body (1'), for letting out the metal melt,
- an upper electromagnetic coil (11) and a lower electromagnetic coil (12) which surround the cylindrical body (1') the one above the other, the upper coil (11) being connected to a drive device (13-20) and oscillating wobble-like relative to the cylindrical body (1') in respect of its height,
- this drive device comprising the following:
- rollers (13) mounted below the upper coil (11),
- a guiding ring (14) which has an inclined guiding track (14') and surrounds the cylindrical body (1'), the rollers (13) running on the guiding track (14'),
- support rollers (15, 18) on which the guiding ring (14) is supported and one (18) of which is driven in such a way that the guiding ring (14) is made to rotate,
- an additional discharge channel (21), arranged between outlet (9) and the lower coil (12) for letting out the melt comprising lighter binding agents,
**characterised in that**
on the upper part of the cylindrical body is arranged a plurality of feed chutes (22) having associated horizontal feed channels (23), which lead into the chamber (1) above the surface of the melt, and **in that** a portion, preferably 10%, of the total charge of raw material for the reactor reaches the melt surface via these feed channels (23) and in so doing forms an annular sliding body (24) for protecting the lining of the cylindrical body (1') .

2. Plasma separation reactor or plasma separator according to claim 1,
**characterised in that**
a granulator (25) is provided for granulating, cooling and using the heat of the lighter binding agents, preferably cement clinker melt, let out of the discharge channel (21) and has two long parallel metal cylinders which rotate about their axes in opposite directions from each other and are water-cooled on the inside.

## Patentansprüche

1. Plasmasplatungsreaktor oder Plasmaseparator zur gleichzeitigen Verarbeitung einer Schmelze aus hochflüssigen, metallischen und nichtmetallischen Rohstoffen sowie der Sublimate dieser Schmelze und aus Begleitbuntmetallen, wobei dieser Reaktor folgendes umfasst:
- eine durch einen Zylinderkörper (1') gebildete Kammer (1),
- mindestens zwei hohle Stabelektroden (2, 3), die in die Kammer (1) durch einen luftdichten Kammerdeckel (4) ragen, durch die der Rohstoff zugeführt wird und die in ihren Hohlräumen austauschbare, schneckenförmig angeordnete Heizelemente (5, 6) aufweisen, die als geneigte, das Fallen des Rohstoffs behindernde Schüttzwischenböden (5) ausgebildet sind,
- eine im Boden des Zylinderkörpers (1') angeordnete Ablassöffnung (9) zum Ablassen der metallischen Schmelze,
- eine elektromagnetische Oberspule (11) und eine elektromagnetische Unterspule (12), die den Zylinderkörper (1') übereinander umgeben, wobei die Oberspule (11) gegenüber dem Zylinderkörper (1') wobbelartig schwingend in Bezug auf ihre Höhe mit einer Antriebsvorrichtung (13 - 20) verbunden ist,
- diese Antriebsvorrichtung aus folgendem besteht:
- unter der Oberspule (11) befestigte Rollen (13),
- einen eine schräge Führungsbahn (14') aufweisenden, den Zylinderkörper (1') umgebenden Führungsring (14), wobei die Rollen (13) auf der Führungsbahn (14') laufen,
- Stützrollen (15, 18), auf denen der Führungsring (14) abgestützt ist und von denen eine (18) derart angetrieben wird, dass der Führungsring (14) in Drehbewegung versetzt wird,
- einen zwischen der Ablassöffnung (9) und der Unterspule (12) angeordneten, zusätzlichen Ablasskanal (21) für das Ablassen der Schmelze aus leichteren Bindemitteln,
**dadurch gekennzeichnet, dass**
am Oberteil der Zylinderkörpers mehrere Zuführschächte (22) mit zugeordneten, horizontalen Zuführungskanälen (23) angeordnet sind, die oberhalb des Schmelzenspiegels in die. Kammer (1) führen, und dass ein Teil, vorzugsweise 10 %, der Gesamtbeschickung des Reaktors mit Rohstoff über diese Zuführungskanäle (23) bis zum Schmelzenspiegel gelangt und dabei einen ringförmigen Rutschkörper (24) zum Schutz der Auskleidung des Zylinderkörpers (1') bildet.

2. Plasmaspaltungsreaktor oder Plasmaseparator nach Anspruch 1,
**dadurch gekennzeichnet,**
**dass** ein Granulator (25) zur Granulierung, Abkühlung und Wärmeverwertung der aus dem Ablasskanal (21) abgelassenen, leichteren Bindemitteln, vorzugsweise Zementklinkerschmelze, vorgesehen ist und zwei lange, prallele Metallzylinder aufweist, die sich um ihre Achsen in entgegengesetzten Richtungen gegeneinander drehen und innen wassergekühlt sind.

## Revendications

1. Réacteur de séparation à plasma ou séparateur à plasma pour le traitement simultané d'une masse fondue constituée de matières premières très fluides, métalliques et non métalliques, ainsi que des produits de sublimation de cette masse fondue et de métaux mélangés d'accompagnement, ce réacteur comprenant ce qui suit :
- une chambre (1) formée par un corps (1') cylindrique,
- au moins deux électrodes (2, 3) creuses en forme de barreau, qui font saillie dans la chambre (1) en passant à travers un couvercle (4) de chambre étanche à l'air, par lesquelles la matière première est apportée et qui ont, dans leur espace creux, des éléments (5, 6) chauffants, remplaçables, en forme de vis, qui sont constitués sous la forme de plateaux (5) intermédiaires inclinés pour du produit en vrac, faisant obstacle à la chute de la matière première,
- une ouverture (9) de sortie disposée dans le fond du corps (1') cylindrique pour faire sortir la masse fondue métallique,
- une bobine (11) supérieure électromagnétique et une bobine (12) inférieure électromagnétique, qui entourent l'une sur l'autre le corps (1') cylindrique, la bobine (1) supérieure étant reliée en oscillant, du point de vue de la wobulation par rapport au corps (1') cylindrique pour ce qui concerne son niveau, à un dispositif (13 à 20) d'entraînement),
- ce dispositif d'entraînement étant constitué de ce qui suit :
- des galets (13) fixés sous la bobine (11) supérieure,
- un anneau (14) de guidage ayant une voie (14') de guidage inclinée et entourant le corps (1') cylindrique, les galets (13) roulant sur la voie (14') de guidage,
- des galets (15, 18) d'appui, sur lesquels l'anneau (14) de guidage s'appuie et dont l'un (18) est entraîné de façon à mettre l'anneau (14) de guidage en rotation,
- un canal (21) de sortie supplémentaire disposé entre l'ouverture (9) de sortie et la bobine (12) inférieure pour la sortie de la masse fondue constituée de liants légers,
**caractérisé en ce que**
à la partie supérieure du corps cylindrique sont disposés plusieurs puits (22) d'apport ayant des canaux (23) d'apport associés horizontaux, qui débouchent au-dessus du niveau de la masse fondue dans la chambre (1) et **en ce qu'**une partie, de préférence 10 %, du chargement total du réacteur en matière première, arrive par ces canaux (23) d'apport jusqu'au niveau de la masse fondue et forme ainsi un corps (24) annulaire de glissement pour la protection du revêtement du corps (1') cylindrique.

2. Réacteur de séparation à plasma ou séparateur à plasma suivant la revendication 1,
**caractérisé en ce qu'**il est prévu un granulateur (25) de granulation de refroidissement et de récupération de la chaleur des liants légers quittant le canal (21) de sortie, de préférence de la masse fondue de clinker de ciment, et qui a deux cylindres métalliques longs parallèles, qui tournent l'un par rapport à l'autre autour de leurs axes dans des sens opposés et qui sont refroidis intérieurement par de l'eau.
